# EUROPÄISCHE PATENTSCHRIFT

(11) **EP 3 817 967 B1**
(45) Veröffentlichungstag und Bekanntmachung des Hinweises auf die Patenterteilung: **06.07.2022**
(21) Anmeldenummer: 19724157.3
(22) Anmeldetag: 09.05.2019
(51) Int. Cl.: B62D 13/06, B62D 15/02, B60R 1/00

(54) **VERFAHREN ZUR UNTERSTÜTZUNG BEI EINEM RANGIERMANÖVER EINES GESPANNS AUS ZUGFAHRZEUG UND ANHÄNGER, SYSTEM UND GESPANN**
METHOD FOR PROVIDING ASSISTANCE DURING A PARKING MANEUVER OF A VEHICLE COMBINATION OF A TOWING VEHICLE AND A TRAILER, SYSTEM, AND COMBINATION
PROC& XC9;D& XC9; D'ASSISTANCE & XC0; UNE MAN& X152;UVRE D'UN ATTELAGE COMPOS& XC9; D'UN V& XC9;HICULE TRACTEUR ET D'UNE REMORQUE, SYST& XC8;ME ET ATTELAGE

(30) Priorität: 03.07.2018 DE 102018210877
(43) Veröffentlichungstag der Anmeldung: 12.05.2021
(73) Patentinhaber: Robert Bosch GmbH, 70442 Stuttgart (DE)
(72) Erfinder: FOCKE, Thomas, 31180 Ahrbergen (DE); LOOS, Hartmut, 31141 Hildesheim (DE); KLIE, Patrick, 31139 Hildesheim (DE)
(86) Internationale Anmeldenummer: PCT/EP2019/061949
(87) Internationale Veröffentlichungsnummer: WO 2020/007523

(56) Entgegenhaltungen:
- DE-A1-102009 012 253
- DE-A1-102017 201 717

## Beschreibung

### Stand der Technik

Die vorliegende Erfindung betrifft ein Verfahren zur Unterstützung bei einem Rangiermanöver eines Gespanns aus Zugfahrzeug und Anhänger, ein System und ein Gespann.

Surround-View-Systeme für eine Parkmanöverassistenz, welche typischerweise mit drei bis sechs Kameras ausgestattet sind, bieten eine ausreichende Rundumsicht und erlauben insbesondere das Ausrichten des Fahrzeugs an Parklinien. Kostengünstigere rückfahrkamerabasierte Parkmanöverassistenzsysteme bieten lediglich die Sicht hinter das Fahrzeug und nicht die Möglichkeit, sich an statischen Strukturen im Bild auszurichten. Insbesondere sind hierbei parallele Parklinien eines Parkplatzes am Ende eines Einparkmanövers nicht mehr sichtbar.

US 2016/207459 A1 und WO2016/0822961 A1 beschreiben jeweils ein Verfahren, bei dem zuvor aufgenommene Bilder der Rückfahrkamera in einen Bildbereich außerhalb des aktuell grafisch dargestellten Sichtbereiches der Rückfahrkamera projiziert werden.

EP 2 921 350 A2 offenbart ein videobasiertes (teil-)autonomes An- und Abkoppeln eines Anhängers.

DE 10 2009 012 253 A1 A1, welche als nächstliegender Stand der Technik gegenüber dem Gegenstand des unabhängigen Anspruchs 1 angesehen wird, beschreibt Verfahren zum Durchführen eines Parkmanövers eines Gespanns mit einer Rückfahrkamera am Anhänger, wobei in einem Schritt ein feststehendes Objekt erkannt wird.

### Offenbarung der Erfindung

Gemäß einem ersten Aspekt betrifft die vorliegende Erfindung ein Verfahren zur Unterstützung bei einem Rangiermanöver eines Gespanns aus Zugfahrzeug und Anhänger. Hierbei kommt als "Zugfahrzeug" insbesondere jedes Fahrzeug infrage, welches fähig ist, einen Anhänger zu ziehen und insbesondere frei manövrierfähig und mittels eines motorisierten Antriebes fahr- und steuerbar ist, wie z.B. ein PKW und/oder ein LKW und/oder ein Traktor. Ein "Anhänger" ist insbesondere jedes unter Verbindung mit einem Zugfahrzeug manövrierfähige Fahrzeug. Hierbei kommen insbesondere ein Wohnwagen und/oder ein Pferdeanhänger und/oder sonstige Anhänger infrage. Entsprechend ist ein Gespann eine Kombination aus Anhänger und Zugfahrzeug. Der Begriff "Rangiermanöver" bezeichnet insbesondere bestimmte Fahrbewegungen, insbesondere bei Geschwindigkeiten von unter 6 km/h, mit Gespannen, z.B. das Führen eines LKW-Anhängers an Be- oder Entladestellen und/oder das Einparken eines PKWs unter wiederholtem Versuch bei engen Parklücken. In einem ersten Schritt des erfindungsgemäßen Verfahrens erfolgt ein Erfassen eines feststehenden Objektes, z.B. einer Bodenmarkierung, insbesondere einer Parklinie, durch eine Rückfahrkamera des Zugfahrzeuges. Zusätzlich kann das Objekt oder eine Umgebung auch mit einer Frontkamera des Zugfahrzeuges erfasst werden. In einem nächsten Schritt erfolgt ein Ermitteln, dass der Anhänger das Objekt für die Rückfahrkamera verdeckt. Dies kann insbesondere mithilfe einer Auswerteeinheit, z.B. einer CPU und/oder eines Mikrocontrollers und/oder einer elektronischen Steuereinheit, z.B. einer Head Unit, des Fortbewegungsmittels erfolgen. Das Verdecken kann in Abhängigkeit einer Analyse von Bildern, welche aus einem Videoeingangssignal der Rückfahrkamera generiert werden, ermittelt werden. Dabei kommen für eine Analyse insbesondere eine Bildmerkmalsanalyse und/oder eine Helligkeitsverteilungsanalyse und/oder eine Farbanalyse des aus dem Videosignal der Rückfahrkamera erzeugten Bildes infrage. Ein Verdecken kann ein räumliches Versperren des Sichtfeldes der Rückfahrkamera auf das Objekt durch den Anhänger und/oder einen Schattenwurf des Anhängers auf das Objekt umfassen. In einem weiteren Schritt erfolgt ein Überlagern eines Abbildes des Anhängers durch ein das verdeckte Objekt repräsentierendes Bildelement, beispielsweise eine Darstellung einer Parklinie, in einem mittels der Rückfahrkamera ermittelten Bild. Mit anderen Worten wird das für die Rückfahrkamera nicht mehr sichtbare Objekt zur Unterstützung des Rangiermanövers als eine grafische Darstellung auf ein Abbild des Anhängers projiziert, damit das Objekt weiterhin für einen Anwender sichtbar bleibt. Die grafische Darstellung des Bildes, welches durch die Rückfahrkamera ermittelt wird, kann z.B. auf einem Kombidisplay und/oder einem zentralen Informationsdisplay und/oder einem Head-up Display erfolgen. Somit ermöglicht das erfindungsgemäße Verfahren ein kostengünstiges Einkamera-System für eine Manöverunterstützung in Bezug auf die Ausrichtung eines Gespanns an ortsfesten Umgebungsstrukturen innerhalb eines Rangiermanövers. Hierbei entfällt die Notwendigkeit einer zusätzlichen Kamera am Anhänger.

Die Unteransprüche zeigen bevorzugte Weiterbildungen der Erfindung.

In einer bevorzugten Weiterbildung umfasst das erfindungsgemäße Verfahren den Schritt eines Erzeugens eines Bird's-eye View-Bildes, wobei das Bird's-eye View-Bild aus Umgebungsaufnahmen, welche durch die Rückfahrkamera vor und/oder während des Rangiermanövers aufgenommen werden, durch ein Abbild des durch den Anhänger verdeckten Sichtfeldes der Rückfahrkamera in dem Bild überlagert wird. In diesem Schritt des erfindungsgemäßen Verfahrens werden insbesondere Umgebungsaufnahmen, die beispielsweise beim Anfahren und/oder Passieren eines Rangierareals durch die Rückfahrkamera aufgenommen wurden, in ein Bird's-eye View-Bild des Displays eingefügt. Insbesondere kann so der grafische Bereich, welcher im Bild dem Abbild des durch den Anhänger verdeckten Sichtfeldes der Rückfahrkamera entspricht, durch vorherige Umgebungsaufnahmen realitätsnah dargestellt werden. Dies ermöglicht dem Anwender ein einfacheres Rangieren mit dem Gespann. Zusätzlich oder alternativ können vor und/oder während des Rangiermanövers durch die Rückfahrkamera aufgenommene Bilder bzw. Umgebungsaufnahmen insbesondere bewegungskompensiert über die Visualisierung des nichtsichtbaren Bereiches des Bildes überlagert werden. Die Umgebungsaufnahmen können insbesondere während einer Vorwärtsanfahrt des Rangiermanöverareals aufgenommen werden.

In einer weiteren vorteilhaften Ausgestaltung des erfindungsgemäßen Verfahrens repräsentiert das Bildelement zusätzlich eine grafische Darstellung einer Trajektorie des Anhängers. Dies kann insbesondere odometrisch mithilfe eines Ermittelns eines Lenkwinkels des Zugfahrzeuges realisiert werden. Die graphische Darstellung kann beispielsweise eine Linie und/oder eine Kurve aufweisen.

In einer weiteren vorteilhaften Ausgestaltung umfasst das erfindungsgemäße Verfahren ferner die Schritte des Erfassens des Anhängers mit der Rückspiegelersatzkamera und eines Ermittelns einer Position des Abbildes des Anhängers in dem durch die Rückfahrkamera ermittelten Bild. Mit anderen Worten kann insbesondere eine Bewegung des Anhängers während des Rangiermanövers berücksichtigt werden. Beispielsweise kann im Ansprechen darauf eine Position des Anhängers auf dem Bild, welches durch die Rückfahrkamera ermittelt wird, während eines Rangiervorganges aktualisiert werden. Insbesondere kann, falls der Anhänger das Objekt nicht länger verdeckt, das Bildelement ausgeblendet werden. Dies sorgt für eine Verringerung des anwenderseitigen Ablenkungsgrades und zu einer Einsparung von Rechenleistung.

In einer weiteren vorteilhaften Ausgestaltung des erfindungsgemäßen Verfahrens umfasst das Objekt ein parkendes Fremd-Fahrzeug und/oder eine Bodenmarkierung, insbesondere eine Parklinie und/oder einen Fahrbahnstreifen, und/oder eine Pflanze und/oder ein Gebäude und/oder ein Verkehrsschild und/oder eine Installation, beispielsweise einen Hydranten und/oder ein Verkehrsschild, und/oder eine Straßenstruktur, beispielsweise einen Bordstein, und/oder einen Kanaldeckel. Eine Vorgabe bezüglich der Art des zu erfassenden Objektes kann bereits werkseitig vordefiniert sein oder durch den Anwender eingestellt werden. Hierbei können zudem mehrere Objekte durch die Rückfahrkamera erfasst werden und als Bildelement im Falle eines Verdeckens durch den Anhänger auf dem Bild, welches durch die Rückfahrkamera dargestellt wird, über das Abbild des Anhängers überlagert werden. Ferner können Objekte, wie beispielsweise Fahrbahnstreifen, auf dem Bild, insbesondere linear, extrapoliert werden. Insbesondere kann im Falle einer Eigenbewegung des Objektes, z.B. wenn ein parkendes Fahrzeug anfährt, dieses im Falle des Verdeckens als "nicht sicher" oder "nicht ortsfest" klassifiziert werden, woraufhin eine Warnung, z.B. visuell und/oder akustisch und/oder haptisch, an den Anwender ausgegeben werden kann. Somit kann die Sicherheit während des Rangiermanövers gesteigert werden.

Weiterhin vorteilhaft kann das Bildelement in Abhängigkeit eines Lenkwinkels und/oder einer Fahrzeuggeschwindigkeit und/oder einer Beschleunigung dargestellt werden. Hierzu sind insbesondere bereits bekannte odometrische Verfahren denkbar.

In einer anderen vorteilhaften Ausgestaltung des ersten Erfindungsaspektes kann das erfindungsgemäße Verfahren zur Unterstützung durch ein Unterschreiten einer vordefinierten Geschwindigkeit, beispielsweise 6 km/h, und/oder durch eine Anwendereingabe ausgelöst werden. Im Falle eines besonders problematischen Rangiermanövers kann der Anwender somit frühzeitig eine Aufnahme der Umgebung durch die Rückfahrkamera veranlassen, damit für die Unterstützung während des Rangiermanövers genügend Bilddaten für den Anwender zur Verfügung stehen.

In einer weiteren vorteilhaften Ausgestaltung umfasst das erfindungsgemäße Verfahren den Schritt eines Ermittelns, dass der Anhänger angekoppelt wurde. Dies kann durch sämtliche Umgebungssensoren, welche dem Zugfahrzeug zur Verfügung stehen, insbesondere über einen Anhängerkupplungssensor und/oder einen Ultraschallsensor und/oder die Rückfahrkamera, realisiert werden. Hierdurch kann wiederum Rechenleistung gespart werden, da das erfindungsgemäße Verfahren ohne Anhänger bei einem Rangiermanöver nicht durchzuführen ist. Ferner kann z.B. mittels einer Bordelektronik des Zugfahrzeuges auch darüber entschieden werden, einen Ultraschallsensor, welcher im Falle eines Ankoppelns den Anhänger dauerhaft erfasst, zu deaktivieren.

In einer vorteilhaften Weiterbildung umfasst das erfindungsgemäße Verfahren den Schritt eines Filterns des Objektes dahingehend, ob dies eine Kollisionsrelevanz aufweist. Beispielsweise können einer vordefinierten Referenz auf einem Speicher der Bordelektronik des Zugfahrzeuges unterschiedliche Kollisionsrelevanzen für unterschiedliche Objekte zugewiesen sein. Falls beispielsweise ein Hydrant durch die Rückfahrkamera ermittelt wird, kann diesem Hydranten eine hohe Kollisionsrelevanz zugewiesen werden. Im Falle einer Bodenmarkierung kann dieser Beispielsweise ein Attribut "keine Kollisionsrelevanz" zugewiesen werden. Beispielsweise kann mittels der Rückfahrkamera die Position des Hydranten ermittelt werden. Im Falle eines Verdeckens durch den Anhänger kann odometrisch eine Annäherung an den Hydranten ermittelt werden. Beispielsweise kann das Objekt, also z.B. der Hydrant, dann durch das überlagerte Bildelement je nach "Kollisionsgefahr" farblich codiert (grün bis rot) dargestellt werden. Weiterhin oder alternativ kann auch eine akustische Warnung, insbesondere ein Triller und/oder ein Hupen und/oder ein Piepton, und/oder ein haptisches Feedback, wie z.B. ein Rütteln des Lenkrades, ausgegeben werden. Zusätzlich oder alternativ kann ein Objekt auch nach einer Zugfahrzeugführungsrelevanz gefiltert werden. Auch hierzu können Objekte anhand einer vordefinierten Referenz eingeordnet werden. Hierbei kann die Einordnung insbesondere hierarchisch erfolgen. Beispielsweise kann einer Parklinie ein höherer Rang zugewiesen werden als einem Kanaldeckel. Insbesondere können Objekte mit niedrigem Rang herausgefiltert werden. Somit kann die Überlagerung des Abbildes des Anhängers übersichtlicher für den Anwender gestaltet werden.

Die folgenden erfindungsgemäßen Aspekte weisen die vorteilhaften Ausgestaltungen und Weiterbildungen mit den wie vorstehend genannten technischen Merkmalen sowie die generellen Vorteile des erfindungsgemäßen Verfahrens und die jeweils damit verbundenen technischen Effekte entsprechend auf. Zur Vermeidung von Wiederholungen wird deshalb in der Folge auf eine erneute Aufzählung verzichtet.

Gemäß einem zweiten Aspekt betrifft die vorliegende Erfindung ein System, welches eingerichtet ist, das Verfahren gemäß dem ersten Erfindungsaspekt durchzuführen. Das System kann insbesondere in einem Gespann (aus Zugfahrzeug und Anhänger) enthalten sein. Insbesondere umfasst das Zugfahrzeug eine Rückfahrkamera, welche eingerichtet ist, ein feststehendes Objekt zu erfassen und eine Auswerteeinheit, welche eingerichtet ist, ein Verdecken des feststehenden Objektes durch einen Anhänger zu ermitteln und welche ferner eingerichtet ist, ein Abbild des Anhängers mit einem das verdeckte Objekt repräsentierenden Bildelement in ein mittels der Rückfahrkamera ermitteltes Bild zu überlagern sowie ein Display, welches eingerichtet ist, das Bild darzustellen.

Gemäß einem dritten Aspekt betrifft die vorliegende Erfindung ein Gespann, welches ein System gemäß dem zweiten Erfindungsaspekt aufweist.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine Ausführungsform des erfindungsgemäßen Gespanns;
- Figur 2: eine Vogelperspektive einer Ausführungsform des erfindungsgemäßen Gespanns;
- Figur 3: eine Illustration von Verfahrensschritten gemäß einer Ausführungsform des erfindungsgemäßen Verfahrens;
- Figur 4: eine Illustration von Verfahrensschritten gemäß einer weiteren Ausführungsform des erfindungsgemäßen Verfahrens; und
- Figur 5: ein Flussdiagramm einer Ausführungsform des erfindungsgemäßen Verfahrens.

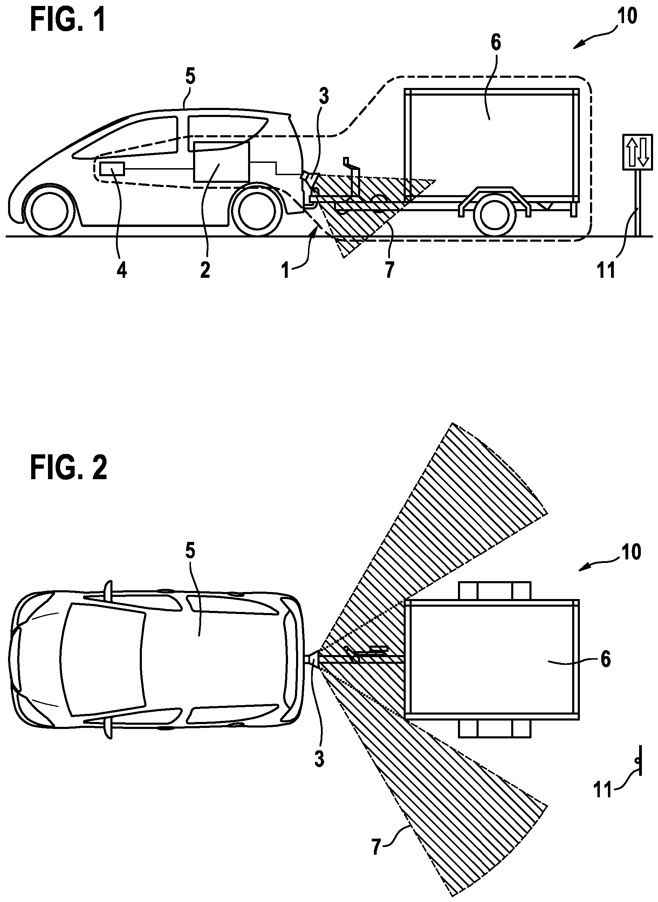

Figur 1 zeigt eine Ausführungsform des erfindungsgemäßen Gespanns 10 umfassend ein Zugfahrzeug 5, hier in Form eines PKWs, und einen Anhänger 6. Ferner umfasst das Gespann 10 ein erfindungsgemäßes System 1, welches ein Display 4, eine Auswerteeinheit 2 und eine Rückfahrkamera 3 umfasst. Hierbei ist die Rückfahrkamera 3 eingerichtet, mithilfe der Auswerteeinheit 2 zu ermitteln, ob ein Objekt 11, hier in Form eines Schildes, welches zuvor durch das Sichtfeld 7 der Rückfahrkamera 3 erfasst wurde, durch den Anhänger 6 verdeckt wird. Das Display 4, welches mit der Auswerteeinheit 2 verbunden ist, stellt ein entsprechendes Bild dar, welches ein Abbild des Anhängers 6 enthält und ein Bildelement 13 repräsentierend das Objekt 11, diesem Abbild überlagert, falls der Anhänger 6 das Sichtfeld 7 auf das Objekt 11 verdeckt.

Figur 2 zeigt eine Ausführungsform des erfindungsgemäßen Gespanns 10 aus der Vogelperspektive.

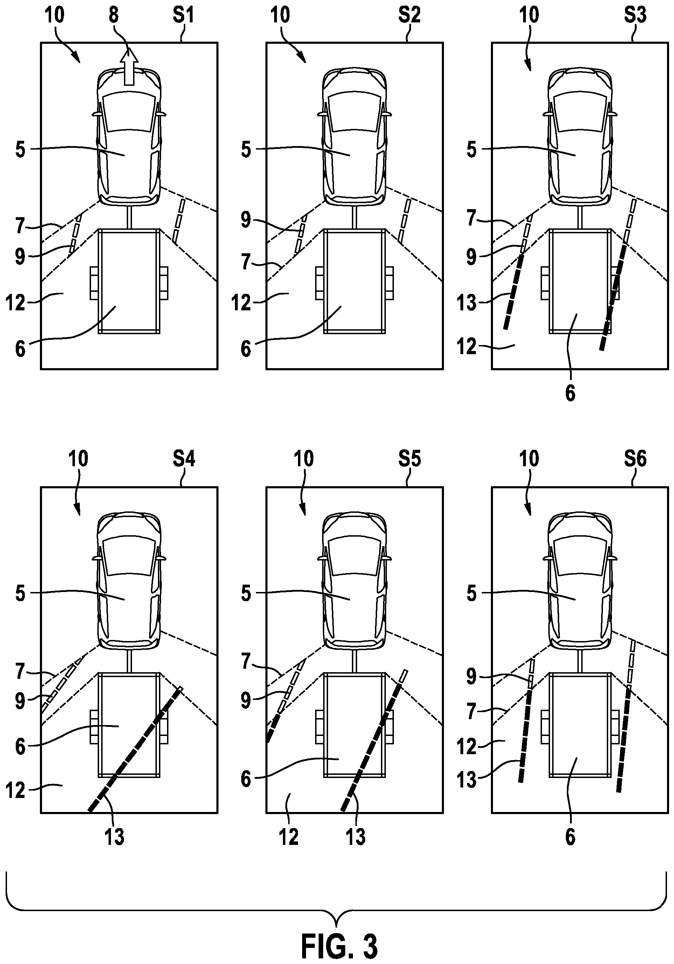

Figur 3 zeigt eine Illustration von Verfahrensschritten einer Ausführungsform des erfindungsgemäßen Verfahrens über entsprechende Bird's-eye View-Bilder, welche jeweils ein Abbild des Zugfahrzeuges 5, ein Abbild des Anhängers 6, und ein Abbild des Sichtfeldes 7 der Rückfahrkamera 3 zeigen. Hierbei dienen die Kacheln in Figur 3 als Illustrationen der Schritte S1 bis S6. Für Schritt S1 wird ein Bird's-Eye-View-Abbild einer Vorwärtsfahrt des Gespanns 10, welches durch den Vorwärtspfeil 8 signalisiert wird, gezeigt. Hierbei erfasst die Rückfahrkamera 3 ein Objekt 11 (im vorliegenden Fall Parklinien 9 auf der Fahrbahn). Für Schritt S2 wird der Beginn des Rangiermanövers gezeigt. Hierbei werden Parklinien 9 aufgrund des verdeckten Sichtbereiches 12 nicht dargestellt. Nachdem das erfindungsgemäße Verfahren zur Unterstützung bei dem Rangiermanöver in Schritt S3 ausgelöst wird, werden Bildelemente 13 repräsentierend das Objekt in den verdeckten Bereich projiziert. In den Illustrationen der Schritte S4 bis S6 wird zugleich der Anhänger 6 durch die Rückfahrkamera 3 erfasst und dessen Position kontinuierlich ermittelt, um ein Ausrichten an den Parklinien 9 zu ermöglichen. Hierbei werden die Bildelemente 13 dann dem Abbild des verdeckten Sichtfeldes 12 und dem Abbild des Anhängers 6 überlagert, wenn die realen Parklinien 9 für die Rückfahrkamera 3 durch eine Verdeckung nicht erfassbar sind.

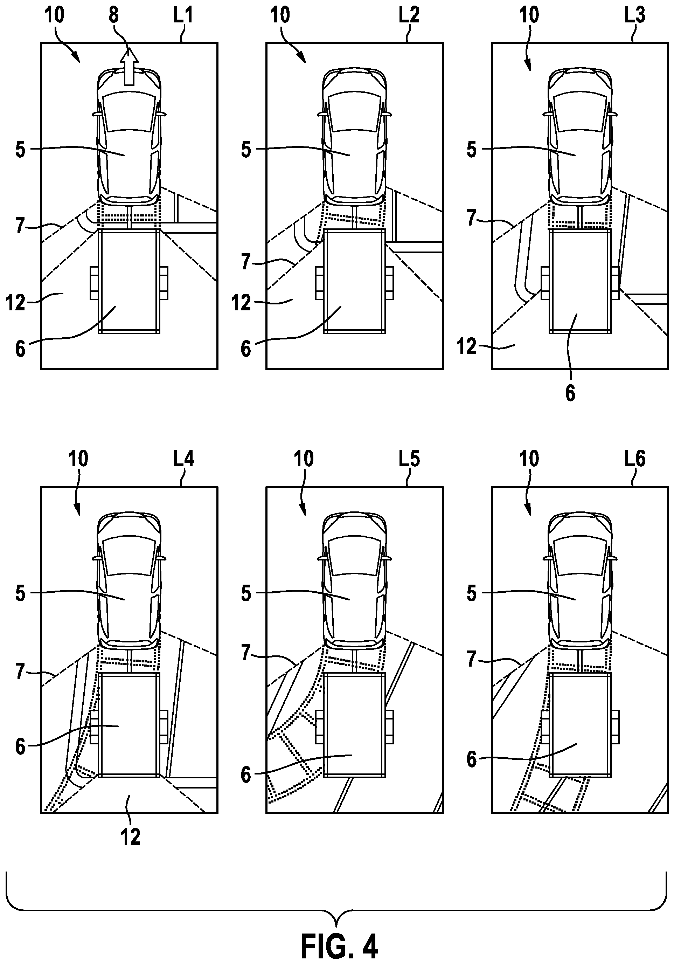

Figur 4 zeigt eine Illustration von erfindungsgemäßen Verfahrensschritten, bei denen vor dem Beginn des Rangiermanövers und währenddessen aufgenommene Umweltaufnahmen, welche durch die Rückfahrkamera 3 aufgenommen werden, in das Bird's-eye View Bild eingefügt werden. Die Kacheln innerhalb der Figur 4 illustrieren hierbei die Verfahrensschritte L1 bis L6. Hierbei werden in Schritt L1 während der Vorwärtsfahrt (vor Beginn des Rangiermanövers) und in Schritt L2 während des Beginns des Rangiermanövers Bilder der durch die Rückfahrkamera 3 erfassten Umgebung gespeichert. In Schritt L3 werden schließlich zuvor aufgenommene Bilder dem Abbild des verdeckten Sichtfeldes 12 überlagert, wodurch das Abbild des verdeckten Sichtfeldes 12 im Gegensatz zum realen verdeckten Sichtfeld 12 flächenmäßig reduziert dargestellt wird. In den Schritten L4 bis L6 werden die zuvor aufgenommenen Rückfahrkamerabilder bewegungskompensiert dem Abbild des verdeckten Sichtfeldes 12 überlagert. Derartige Bilder, welche bewegungskompensiert erstellt werden, können z.B. comicartig in Form einer "3D- Art Map" und/oder als Strichzeichnung und/oder als Geisterbild und/oder als Gradientenbild dargestellt werden. Dies kann z.B. auf einem 3D-Grafikprozessor der Auswerteeinheit 2, insbesondere einer Head Unit, erfolgen.

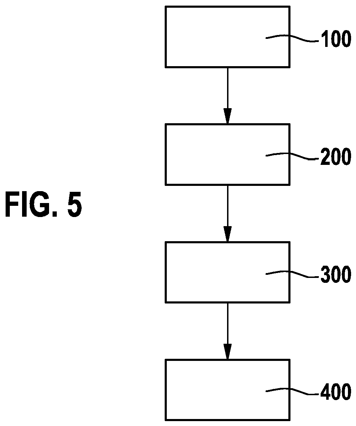

Figur 5 zeigt ein Flussdiagramm einer Ausführungsform des erfindungsgemäßen Verfahrens. In einem ersten Schritt 100 erfolgt ein Auslösen des erfindungsgemäßen Verfahrens zur Unterstützung bei einem Rangiermanöver durch ein langsames Fahren des Zugfahrzeuges 5, beispielsweise mit einer Geschwindigkeit von < 6 km/h. Im Ansprechen darauf erfolgt im zweiten Schritt 200 ein Erfassen eines feststehenden Objektes 11, beispielsweise einer Parklinie 9, durch die Rückfahrkamera 3 des Zugfahrzeuges 5. Im dritten Schritt 300 wird, beispielsweise mithilfe einer Auswerteeinheit 2, ermittelt, ob ein verdecktes Sichtfeld 12 existiert, was durch ein Verdecken des Objektes 11 durch den Anhänger 6 hervorgerufen werden kann. Sollte ein solches Verdecken vorliegen, so wird in einem vierten Schritt 400 ein Abbild des Anhängers 6 auf einem durch die Rückfahrkamera 3 ermittelten Bild, welches z.B. auf einem Display 4 dargestellt wird, durch ein das verdeckte Objekt 11 repräsentierendes Bildelement 13 überlagert.

## Patentansprüche

1. Verfahren zur Unterstützung bei einem Rangiermanöver eines Gespanns (10) aus Zugfahrzeug (5) und Anhänger (6) umfassend die Schritte:
• Erfassen (200) eines feststehenden Objektes (11) durch eine Rückfahrkamera (3) des Zugfahrzeuges (5);
• Ermitteln (300), dass das Objekt (11) für die Rückfahrkamera (3) durch den Anhänger (6) verdeckt wird; und
• Überlagern (400) eines Abbildes des Anhängers (6) durch ein das verdeckte Objekt (11) repräsentierendes Bildelement (13) in einem mittels der Rückfahrkamera (3) ermittelten Bild.

2. Verfahren nach Anspruch 1 ferner umfassend
• den Schritt eines Erzeugens eines Bird's-eye View-Bildes aus Umgebungsaufnahmen, welche durch die Rückfahrkamera (3) vor und/oder während des Rangiermanövers aufgenommen werden, und des Überlagerns dieses Bird's-eye View-Bildes über ein Abbild des durch den Anhänger (6) verdeckten Sichtfeldes (12) in dem Bild; und/oder
• den Schritt eines Überlagerns von Umgebungsaufnahmen, welche durch die Rückfahrkamera (3) vor und/oder während des Rangiermanövers aufgenommen werden, über das Abbild des durch den Anhänger (6) verdeckten Sichtbereiches (12).

3. Verfahren nach Anspruch 1 oder 2, wobei das Bildelement (13) zusätzlich eine grafische Darstellung einer Trajektorie des Anhängers (6) repräsentiert.

4. Verfahren nach einem der vorstehenden Ansprüche ferner umfassend die Schritte:
• Erfassen des Anhängers (6) mit der Rückspiegelersatzkamera (3); und
• Ermitteln einer Position des Abbildes des Anhängers (6) in dem durch die Rückfahrkamera (3) ermittelten Bild.

5. Verfahren nach einem der vorstehenden Ansprüche, wobei das Objekt (11) ein parkendes Fremd-Fahrzeug und/oder eine Bodenmarkierung und/oder eine Pflanze und/oder ein Gebäude und/oder eine Straßenstruktur und/oder eine Installation und/oder einen Kanaldeckel umfasst.

6. Verfahren nach einem der vorstehenden Ansprüche, wobei das Bildelement (13) in Abhängigkeit eines Lenkwinkels und/oder einer Fahrzeuggeschwindigkeit und/oder einer Beschleunigung dargestellt wird.

7. Verfahren nach einem der vorstehenden Ansprüche ferner umfassend den Schritt des Auslösens (100) des Verfahrens zur Unterstützung durch ein Unterschreiten einer vordefinierten Geschwindigkeit und/oder durch eine Anwendereingabe.

8. Verfahren nach einem der vorstehenden Ansprüche ferner umfassend den Schritt eines Ermittelns, dass der Anhänger (6) angekoppelt wurde.

9. Verfahren nach einem der vorstehenden Ansprüche ferner umfassend den Schritt eines Filterns des Objektes (11) dahingehend, ob dieses eine Kollisionsrelevanz und/oder eine Zugfahrzeugführungsrelevanz aufweist.

10. System (1), welches eingerichtet ist, ein Verfahren nach einem der Ansprüche 1 bis 9 durchzuführen.

11. Gespann (10) umfassend ein System (1) nach Anspruch 10.

## Claims

1. Method for assisting during a manoeuvring operation of a tractor-trailer combination (10) of a tractor vehicle (5) and a trailer (6), comprising the steps of:
• capturing (200) a spatially fixed object (11) by way of a reversing camera (3) of the tractor vehicle (5) ;
• ascertaining (300) that the object (11) is obscured for the reversing camera (3) by the trailer (6); and
• superimposing (400) an image presentation of the trailer (6) with an image element (13) representing the obscured object (11) in an image ascertained by means of the reversing camera (3).

2. Method according to Claim 1, furthermore comprising
• the step of generating a bird's-eye-view image from vicinity recordings, recorded by the reversing camera (3) before and/or during the manoeuvring operation, and of superposing this bird's-eye-view image on an image presentation of the field of view (12) that is obscured by the trailer (6) in the image; and/or
• the step of superposing vicinity recordings, recorded by the reversing camera (3) before and/or during the manoeuvring operation, on the image presentation of the field of vision (12) that is obscured by the trailer (6).

3. Method according to Claim 1 or 2, wherein the image element (13) additionally represents a graphical illustration of a trajectory of the trailer (6).

4. Method according to one of the preceding claims, furthermore comprising the steps of:
• capturing the trailer (6) using the rear-view mirror substitution camera (3); and
• ascertaining a position of the image presentation of the trailer (6) in the image ascertained by the reversing camera (3).

5. Method according to one of the preceding claims, wherein the object (11) comprises a parked other vehicle and/or a ground marking and/or a plant and/or a building and/or a road structure and/or an installation and/or a manhole cover.

6. Method according to one of the preceding claims, wherein the image element (13) is illustrated in dependence on a steering angle and/or a vehicle speed and/or an acceleration.

7. Method according to one of the preceding claims, furthermore comprising the step of initiating (100) the method for assisting by a speed falling under a predefined speed and/or by way of a user input.

8. Method according to one of the preceding claims, furthermore comprising the step of ascertaining that the trailer (6) has been coupled to the tractor vehicle.

9. Method according to one of the preceding claims, furthermore comprising the step of filtering the object (11) to ascertain whether it has collision relevance and/or tractor vehicle guidance relevance.

10. System (1) configured for carrying out a method according to one of Claims 1 to 9.

11. Tractor-trailer combination (10) comprising a system (1) according to Claim 10.

## Revendications

1. Procédé d'assistance lors d'une manœuvre d'un attelage (10) composé d'un véhicule tracteur (5) et d'une remorque (6), comprenant les étapes consistant à :
• détecter (200) un objet stationnaire (11) à l'aide d'une caméra de recul (3) du véhicule tracteur (5) ;
• déterminer (300) que l'objet (11) sera masqué pour la caméra de recul (3) par la remorque (6) ; et
• superposer (400) une reproduction de la remorque (6) à l'aide d'un élément visuel (13) représentant l'objet masqué (11) sur une image déterminée au moyen de la caméra de recul (3).

2. Procédé selon la revendication 1, comprenant en outre
• l'étape consistant à produire une image en vue aérienne à partir de prises de vue de l'environnement qui sont enregistrées par la caméra de recul (3) avant et/ou pendant la manœuvre, et à superposer cette image en vue aérienne sur une reproduction du champ de vision (12) masqué par la remorque (6) sur l'image ; et/ou
• l'étape consistant à superposer des prises de vue de l'environnement qui sont enregistrées par la caméra de recul (3) avant et/ou pendant la manœuvre sur la reproduction du champ de vision (12) masqué par la remorque (6).

3. Procédé selon la revendication 1 ou 2, dans lequel l'élément visuel (13) représente en outre une représentation graphique d'une trajectoire de la remorque (6).

4. Procédé selon l'une quelconque des revendications précédentes, comprenant en outre les étapes consistant à :
• détecter la remorque (6) à l'aide de la caméra de rétrovision de secours (3) ; et
• déterminer une position de la reproduction de la remorque (6) sur l'image déterminée par la caméra de recul (3).

5. Procédé selon l'une quelconque des revendications précédentes, dans lequel l'objet (11) comprend un véhicule tiers en stationnement et/ou un marquage au sol et/ou une plante et/ou un bâtiment et/ou une structure routière et/ou une installation et/ou un couvercle de regard.

6. Procédé selon l'une quelconque des revendications précédentes, dans lequel l'élément visuel (13) est représenté en fonction d'un angle de braquage et/ou d'une vitesse de véhicule et/ou d'une accélération.

7. Procédé selon l'une quelconque des revendications précédentes, comprenant en outre l'étape consistant à déclencher (100) le procédé d'assistance par un soupassement d'une vitesse prédéfinie et/ou par une entrée utilisateur.

8. Procédé selon l'une quelconque des revendications précédentes, comprenant en outre l'étape consistant à déterminer que la remorque (6) a été attelée.

9. Procédé selon l'une quelconque des revendications précédentes, comprenant en outre l'étape consistant à filtrer l'objet (11) sur le critère s'il est pertinent en matière de collision et/ou pertinent en matière de conduite du véhicule tracteur.

10. Système (1) qui est conçu pour exécuter un procédé selon l'une quelconque des revendications 1 à 9.

11. Attelage (10) comprenant un système (1) selon la revendication 10.
